# EUROPÄISCHE PATENTSCHRIFT

(11) **EP 0 569 112 B1**
(45) Veröffentlichungstag und Bekanntmachung des Hinweises auf die Patenterteilung: **09.08.1995**
(21) Anmeldenummer: 93250130.7
(22) Anmeldetag: 07.05.1993
(51) Int. Cl.: B60B 39/00

(54) **Gleitschutzvorrichtung für Kraftfahrzeuge**
Anti-skid device for vehicles
Dispositif anti-dérapant pour véhicules

(30) Priorität: 08.05.1992 DE 4215370
(43) Veröffentlichungstag der Anmeldung: 10.11.1993
(73) Patentinhaber: RUD-KETTENFABRIK RIEGER & DIETZ GMBH U. CO., 73432 Aalen (DE)
(72) Erfinder: Zeiser, Peter, Dipl.-Ing., W-7080 Aalen-Wasseralfingen (DE)
(74) Vertreter: Böning, Manfred, Dr.-Ing.

(56) Entgegenhaltungen:
- EP-A- 0 162 823
- DE-A- 3 440 951
- DE-U- 8 914 106

## Beschreibung

Die Erfindung betrifft eine Gleitschutzvorrichtung für Kraftfahrzeuge mit mehreren, an einem in eine Drehbewegung versetzbaren Halter befestigten Kettensträngen, deren dem Halter abgewandte Enden bei in der Betriebsstellung umlaufendem Halter unter Fliehkrafteinwirkung vom Halter weg in den Bereich der Bodenberührungsfläche eines sich drehenden Fahrzeugreifens geschleudert werden, mit einem am Fahrzeug gelagerten Träger für den Halter und mit einem Antriebsaggregat, das vom Führerhaus des Fahrzeuges aus über eine Druckgasleitung mit dem Druck eines gasförmigen Mediums beaufschlagbar ist und durch das der Träger aus einer Ruhestellung in seine Betriebsstellung bewegbar ist.

Bekannt sind Gleitschutzvorrichtungen der vorstehenden Art, deren Antriebsaggregat für den regelmäßig als schwenkbarer Auslegerarm ausgebildeten Träger mit Druckluft aus einem im Fahrzeug zu Bremszwecken vorhandenen Druckluftsystem beaufschlagbar ist (EP 0 162 823 B1). Es versteht sich, daß diese Möglichkeit zum Betätigen des Antriebsaggregates bei Fahrzeugen ohne Druckluftbremssysteme, also insbesondere bei Kleinlastern oder Kleinbussen entfällt. Um auch hier vom Fahrersitz eine ähnlich bequeme Bedienbarkeit der Gleitschutzvorrichtung wie bei schweren Lastkraftwagen und Omnibussen zu schaffen, ist bereits erwogen worden, die entsprechenden kleineren Fahrzeuge mit einem gesonderten Drucklufterzeugungssystem zum Inbetriebnehmen der Gleitschutzvorrichtung auszustatten. Die Realisierung dieses Gedankens und seine breite Anwendung ist in der Praxis indes aus Kosten-, Platz- und Sicherheitsgründen stets gescheitert.

Der Erfindung liegt die Aufgabe zugrunde, einen Weg aufzuzeigen, der es gestattet, bei Kraftfahrzeugen ohne vorhandene oder zusätzlich zu installierende Drucklufterzeugungssysteme mit einfachen Mitteln Gleitschutzvorrichtungen der zur Diskussion stehenden Art zumindest aus ihrer Ruhestellung in ihre Betriebsstellung zu überführen, wobei die Rückführung in die Ausgangsposition problemlos unter Zuhilfenahme einer Rückstellfeder erfolgen kann. Diese Aufgabe wird erfindungsgemäß auf überraschend einfache Weise dadurch gelöst, daß die Druckgasleitung für das den Träger betätigende Antriebsaggregat mit einem von einer handelsüblichen austauschbaren Druckgaspatrone gebildeten autonomen Druckgasspeicher verbindbar ist.

Unter handelsüblichen Druckgaspatronen werden dabei solche Druckgaspatronen verstanden, wie sie insbesondere im Zusammenhang mit Siphons und Sahnezubereitern sowie zum Aufpumpen von Fahrradschläuchen verwendet werden. Derartige Druckgaspatronen sind im allgemeinen mit Kohlendioxyd oder Stickstoff gefüllt und der in ihnen herrschende Gasdruck liegt um ein Vielfaches höher als der Luftdruck in gängigen Fahrzeugbremssystemen. Die hochkomprimierte Gasmenge reicht mithin aus, um gebräuchliche, mit einer Rollmembran oder einem Kolben ausgestattete Antriebsaggregate für die Einleitung von Bewegungen in den Träger einschlägiger Gleitschutzvorrichtungen zu aktivieren, wobei das jeweilige Antriebsaggregat regelmäßig über einen Bowdenzug mit dem Träger verbunden ist.

Weitere Einzelheiten und Merkmale der Erfindung ergeben sich aus den Unteransprüchen und der nachstehenden Beschreibung zweier in der beigefügten Zeichnung dargestellter, besonders vorteilhafter Ausführungsformen. Es zeigen:
Fig. 1 die Draufsicht auf zwei Gleitschutzvorrichtungen und die zu deren Betätigung erforderlichen Mittel,
Fig. 2 einen Schnitt durch eine erste Druckgasquelle, für das die Gleitschutzvorrichtungen aus ihrer Ruhestellung in ihre Betriebsstellung überführende Antriebsaggregat,
Fig. 3 einen Schnitt durch eine zweite Druckgasquelle für das Antriebsaggregat zum Überführen der Gleitschutzvorrichtungen aus ihrer Ruhestellung in ihre Betriebsstellung,
Fig. 4 eine Teildraufsicht auf die Druckgasquelle gemäß Fig. 3,
Fig. 5 teilweise im Schnitt eine Ansicht der Druckgasquelle gemäß den Figuren 3 und 4 in Richtung des Pfeiles V in Fig. 3 und
Fig. 6 einen Schnitt längs der Linie VI-VI in Fig. 3.

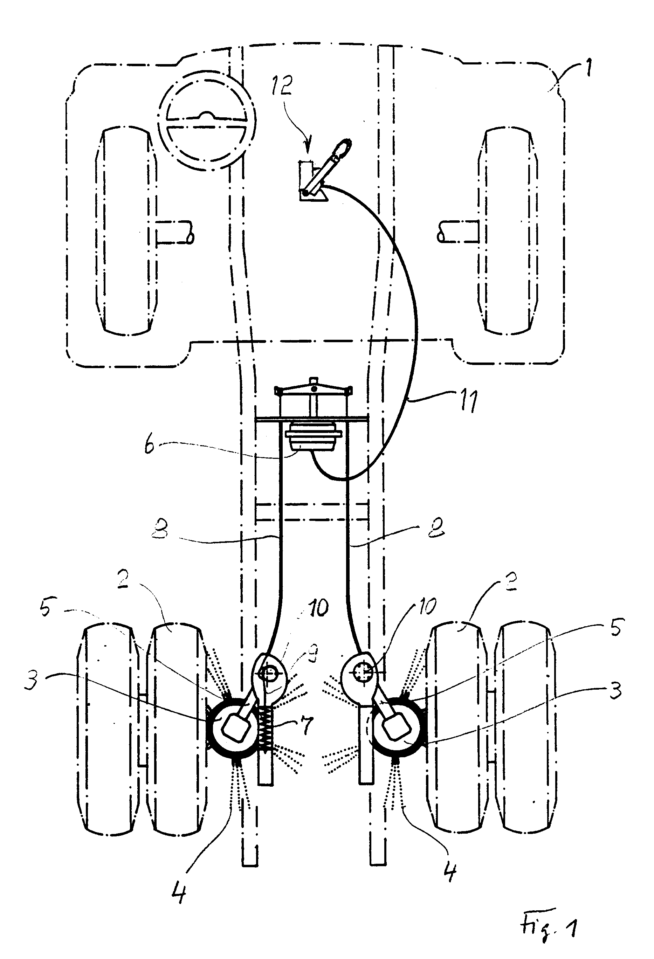

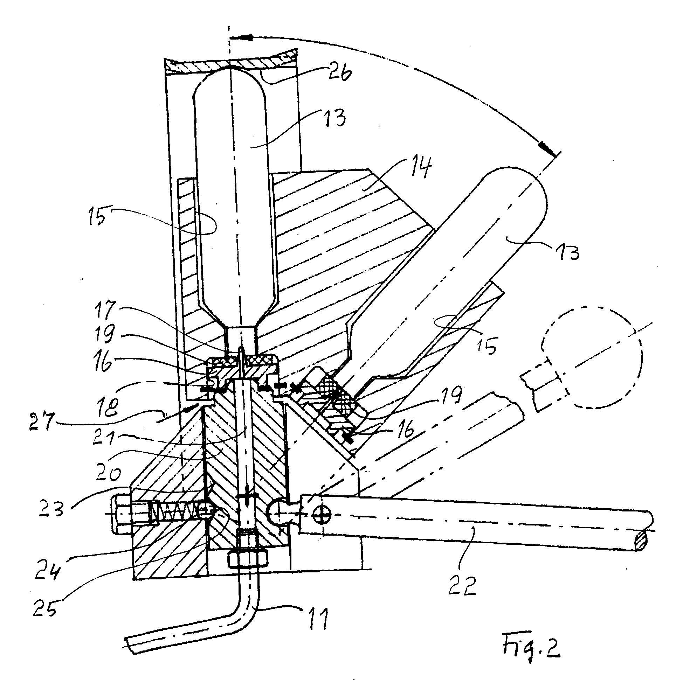

In Figur 1 ist 1 das Führerhaus eines Kleinlasters, der nicht über ein eigenes Drucklufterzeugungssystem mit seinen üblichen Bauteilen, wie Kompressor, Druckluftspeicher u.dgl., verfügt. Dem hinteren Reifen 2 des Fahrzeuges sind zwei Gleitschutzvorrichtungen zugeordnet, die in bekannter Weise aus einem als Reibrad ausgebildeten Halter 3 für eine Vielzahl von Kettensträngen 4, einem schwenkbaren Träger 5 für den Halter 3, einem Antriebsaggregat 6 zum Überführen der Halter 3 aus der Ruhestellung in die in Figur 1 dargestellte Betriebsstellung und aus Rückstellfedern 7 zum Zurückführen der Halter 3 aus ihrer Betriebsstellung in eine Ruhestellung bestehen, wobei das vorzugsweise aus einem Arbeitszylinder und einer Rollmembran bestehende Antriebsaggregat 6 über Bowdenzüge 8 und die Rückstellfedern 7 über einen Zugstrang 9 mit den Schwenkachsen 10 der Träger 5 in Verbindung stehen, um in diese gegenläufige Bewegungen einleiten zu können.

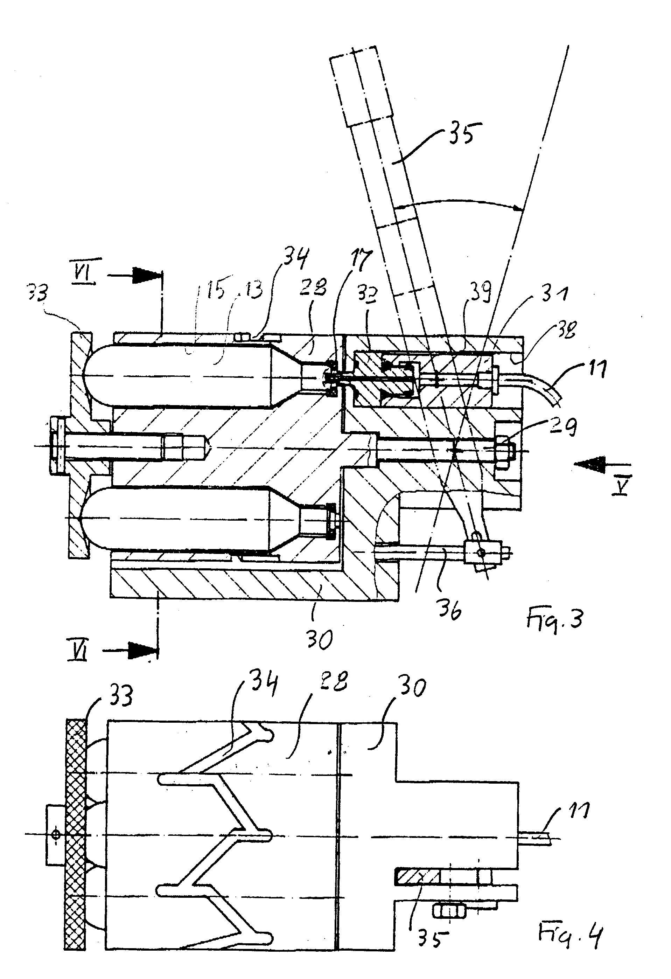

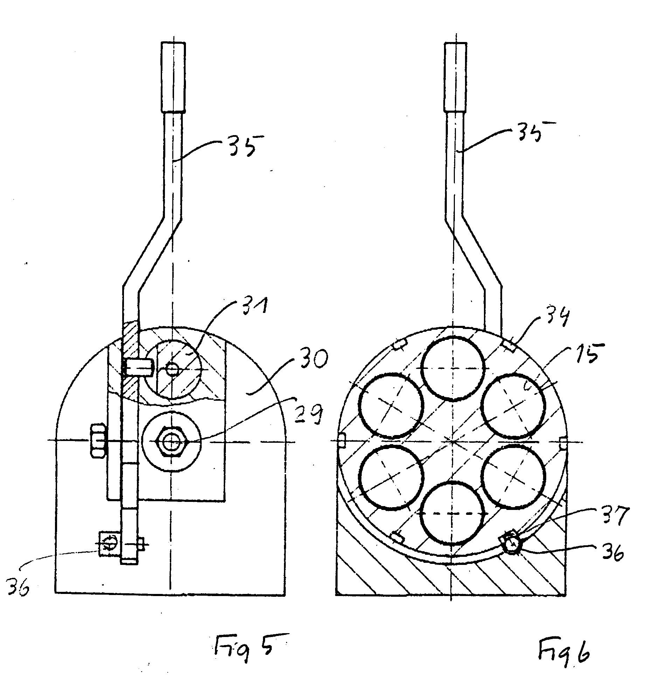

Das Antriebsaggregat 6 ist über eine Druckgasleitung 11 mit einer im Führerhaus 1 angeordneten Druckgasquelle 12 verbunden, die - wie in den Figuren 2 bis 6 dargestellt - mit einem von mindestens einer austauschbaren Druckgaspatrone 13 gebildeten autonomen Druckgasspeicher ausgestattet ist.

Eine besonders einfach ausgebildete und handhabbare Druckgasquelle ist in Figur 2 dargestellt. Sie weist ein schwenkbares Magazin 14 mit Aufnahmen 15 für zwei Druckgaspatronen 13 auf. Zum Öffnen der Druckgaspatronen 13 dient jeweils eine von einem Druckstück 16 gehaltene Hohlnadel 17, die den Verschluß der Druckgaspatrone 13 in bekannter Weise durchstechen kann. Das Magazin 14 ist mit Kammern 18 versehen, in denen jeweils ein Druckstück 16 um begrenzte Beträge hin- und herbewegbar geführt ist. Zwischen dem jeweiligen Druckstück 16 und dem Kopf der zu öffnenden Druckgaspatrone 13 ist eine die Hohlnadel 17 umschließende Ringdichtung 19 angeordnet.

Zum Betätigen des Druckstückes 16 und der Hohlnadel 17 dient ein Stempel 20, der mit einer Bohrung 21 versehen ist, die mit der Hohlnadel 17 fluchtet und deren der Hohlnadel 17 abgewandtes Ende mit der Druckgasleitung 11 in Verbindung steht. In den Stempel 20 kann durch einen von Hand betätigbaren Hebel 22 eine Hin- und Herbewegung eingeleitet werden, deren Endpositionen durch einen Rastmechanismus mit zwei Rastnuten 23,24 und einer Rastkugel 25 definiert sind. Wie aus Figur 2 erkennbar, liegt das Ende der jeweils zu öffnenden Druckgaspatrone 13 während des Durchstechens des Verschlusses der Patrone gegen einen vom Joch eines Bügels gebildeten Anschlag 26 an. Die Druckgaspatrone 13 kann folglich nicht ausweichen, wenn die Hohlnadel 17 in sie eindringt.

Während des Einsatzes der Gleitschutzvorrichtung bleibt der Stempel 20 in der in Figur 2 dargestellten Position. Will man die Gleitschutzvorrichtung wieder aus ihrer Betriebsstellung in die Ruhestellung zurückführen, wird der Hebel 22 in Figur 2 entgegen dem Uhrzeigersinn geschwenkt. Der Stempel 20 geht zurück und das Druckgas im Zylinder des Antriebsaggregates 16 kann über einen durch den Pfeil 27 angedeuteten Ringspalt entweichen. Danach zieht die Rückstellfeder 7 (vgl. Fig. 1) den Träger 5 in seine Ausgangslage zurück.

Bei der Ausführungsform gemäß den Figuren 3 bis 6 wird das Magazin 28 von einer Trommel mit einer größeren Zahl von Aufnahmen 15 für Druckgaspatronen 13 gebildet. Das Magazin 28 ist mit einer Achse 29 drehbar in einem Gehäuse 30 gelagert, in dem auch ein Stempel 31 für ein mit einer Hohlnadel 17 ausgebildetes Druckstück 32 geführt ist. Ein lösbarer Anschlag 33 für sämtliche Druckgaspatronen 13 sichert deren Lage in den Aufnahmen 15.

Am Umfang des Magazins 28 weist dieses eine Steuerkurve 34 auf, über die mittels eines Hebels 35, der auch zum Betätigen des Stempels 31 dient, eine Drehbewegung in das Magazin 28 einleitbar ist. Der Hebel 35 ist zu diesem Zweck mit einer Steuerstange 36 versehen, die mittels eines Vorsprunges 37 in die Steuerkurve 34 greift.

Um bei der Ausführungsform gemäß den Figuren 3 bis 6 das Antriebsaggregat 6 druckfrei machen zu können, ist die Bohrung 38, in der der Stempel 31 und das Druckstück 32 geführt sind, mit einer Entlüftungsnut 39 versehen, aus der das Druckgas ausströmen kann, sobald der Stempel 31 aus der in Figur 3 dargestellten Lage nach rechts verschoben ist. Während dieser Verschiebung nimmt der Stempel 31 das Druckstück 32 mit, so daß die Hohlnadel 17 aus dem Drehbereich des Magazins 28 entfernt wird. Durch jeweils zwei Hin- und Herbewegungen des Hebels 35 läßt sich die nächste Druckgaspatrone 13 in eine mit dem Stempel 31 fluchtende Lage überführen.

## Patentansprüche

1. Gleitschutzvorrichtung für Kraftfahrzeuge mit mehreren, aus einem in eine Drehbewegung versetzbaren Halter (3) befestigten Kettensträngen (4), deren dem Halter (3) abgewandte Enden bei in der Betriebsstellung umlaufendem Halter (3) unter Fliehkrafteinwirkung vom Halter (3) weg in den Bereich der Bodenberührungsfläche eines sich drehenden Fahrzeugreifens (2) geschleudert werden, mit einem am Fahrzeug gelagerten Träger (5) für den Halter (3) und mit einem Antriebsaggregat (6), das vom Führerhaus (1) des Fahrzeuges aus über eine Druckgasleitung (11) mit dem Druck eines gasförmigen Mediums beaufschlagbar ist und durch das der Träger (5) aus einer Ruhestellung in seine Betriebsstellung bewegbar ist, **dadurch gekennzeichnet**, daß die Druckgasleitung (11) mit einem von einer handelsüblichen austauschbaren Druckgaspatrone (13) gebildeten autonomen Druckgasspeicher verbindbar ist.

2. Gleitschutzvorrichtung nach Anspruch 1, **dadurch gekennzeichnet**, daß im Führerhaus (1) des Fahrzeuges eine Vorrichtung zum Öffnen der jeweiligen Druckgaspatrone (13) angeordnet ist.

3. Gleitschutzvorrichtung nach Anspruch 2, **dadurch gekennzeichnet**, daß die Druckgasleitung (11) mit einem Ende einer Bohrung (21) eines hin- und herbewegbaren Stempels (20,31) der Vorrichtung zum Öffnen der Druckgaspatrone (13) verbunden ist.

4. Gleitschutzvorrichtung nach Anspruch 3, **dadurch gekennzeichnet**, daß das der Druckgasleitung (11) abgewandte Ende des Stempels (20,31) zur Betätigung einer den Verschluß der Druckgaspatrone (13) durchbohrenden Hohlnadel (17) dient.

5. Gleitschutzvorrichtung nach Anspruch 4, **dadurch gekennzeichnet**, daß die Hohlnadel (17) im Zentrum eines durch den Stempel (20,31) um begrenzte Beträge hin- und herverschiebbaren Druckstückes (16,32) angeordnet ist.

6. Gleitschutzvorrichtung nach Anspruch 5, **dadurch gekennzeichnet**, daß zwischen dem Druckstück (16) und dem zu öffnenden Ende der Druckgaspatrone (13) eine die Hohlnadel (17) umschließende Ringdichtung (19) angeordnet ist.

7. Gleitschutzvorrichtung nach einem oder mehreren der Ansprüche 3 bis 5, **dadurch gekennzeichnet**, daß der Stempel (20) durch einen von Hand betätigbaren Hebel (22) zwischen zwei durch einen Rastmechanismus (23-25) definierte Stellungen hin- und herbewegbar ist.

8. Gleitschutzvorrichtung nach einem oder mehreren der Ansprüche 2 bis 7, **dadurch gekennzeichnet**, daß die Vorrichtung zum Öffnen der Druckgaspatrone (13) mit einem Magazin (14,28) für mehrere Druckgaspatronen (13) versehen ist.

9. Gleitschutzvorrichtung nach Anspruch 8, **dadurch gekennzeichnet**, daß das Magazin (14) schwenkbar ist und Aufnahmen (15) für mindestens zwei Druckgaspatronen (13) aufweist.

10. Gleitschutzvorrichtung nach Anspruch 9, **dadurch gekennzeichnet**, daß die Aufnahmen (15) aus einer Beschikkungsposition in eine Öffnungsposition schwenkbar sind, in der das hintere Ende der jeweils zu öffnenden Druckgaspatrone (13) gegen einen Anschlag (26) anliegt.

11. Gleitschutzvorrichtung nach einem oder mehreren der Ansprüche 5 bis 10, **dadurch gekennzeichnet**, daß jeder Aufnahme (15) des Magazins (14) ein Druckstück (16) und eine Ringdichtung (19) vorgeschaltet sind.

12. Gleitschutzvorrichtung nach Anspruch 8, **dadurch gekennzeichnet**, daß das Magazin (28) eine um eine Achse (29) drehbare Trommel mit einer Vielzahl von Aufnahmen (15) für Druckgaspatronen (13) bildet.

13. Gleitschutzvorrichtung nach Anspruch 12, **dadurch gekennzeichnet**, daß auf der Seite des Magazins (28), von der die Druckgaspatronen (13) in ihre Aufnahmen (15) einführbar sind, lösbar ein Anschlag (26) für die Enden der in die Aufnahmen (15) eingeführten Druckgaspatronen (13) angeordnet ist.

14. Gleitschutzvorrichtung nach Anspruch 12 oder 13, **dadurch gekennzeichnet**, daß der Umfang des Magazins (28) mit einer Steuerkurve (34) zum Einleiten einer Drehbewegung in das Magazin (28) versehen ist.

15. Gleitschutzvorrichtung nach Anspruch 14, **dadurch gekennzeichnet**, daß zur Einleitung der Drehbewegung in das Magazin (28) und zum Öffnen der Druckgaspatrone (13) ein einziger Hebel (35) dient.

16. Gleitschutzvorrichtung nach einem oder mehreren der Ansprüche 1 bis 15, **dadurch gekennzeichnet**, daß der Träger (5) für den Halter (3) durch eine Rückstellfeder (7) aus der Betriebsstellung in die Ruhestellung zurückbewegbar ist.

17. Gleitschutzvorrichtung nach einem oder mehreren der Ansprüche 1 bis 16, **dadurch gekennzeichnet**, daß der Träger (5) für den Kalter (3) als schwenkbarer Auslegerarm aus gebildet ist.

18. Gleitschutzvorrichtung nach einem oder mehreren der Ansprüche 1 bis 17, **dadurch gekennzeichnet**, daß das Antriebsaggregat (6) über einen Bowdenzug (8) mit dem Träger (5) verbunden ist.

## Claims

1. An anti-skid device for motor vehicles, with a plurality of chain lines (4) which are fastened to a holder (3) capable of being set in rotational movement and whose ends facing away from the holder (3), with the holder (3) rotating in the operating position, are thrown away from the holder (3) under the effect of centrifugal force into the region of the ground contact surface of a rotating vehicle tyre (2), with a carrier (5) mounted on the vehicle and intended for the holder (3), and with a drive unit (6) which, from the driver's cab (1) of the vehicle, can be subjected by way of a compressed-gas pipe (11) to the pressure of a gaseous medium and by means of which the carrier (5) can be moved out of a position of rest into its operating position, wherein the compressed-gas pipe (11) can be connected to an autonomous compressed-gas reservoir formed by a commercially available exchangeable compressed-gas cartridge (13).

2. An anti-skid device as claimed in claim 1, wherein a device for opening the respective compressed-gas cartridge (13) is arranged in the driver's cab (1) of the vehicle.

3. An anti-skid device as claimed in claim 2, wherein the compressed-gas pipe (11) is connected to one end of a bore (21) of a plunger (20, 31), movable to and fro, of the device for opening the compressed-gas cartridge (13).

4. An anti-skid device as claimed in claim 3, wherein the end of the plunger (20, 31) facing away from the compressed-gas pipe (11) serves for actuating a hollow needle (17) drilling through the seal of the compressed-gas cartridge (13).

5. An anti-skid device as claimed in claim 4, wherein the hollow needle (17) is arranged in the center of a thrust piece (16, 32) displaceable to and fro by limited amounts by means of the plunger (20, 31).

6. An anti-skid device as claimed in claim 5, wherein an annular gasket (19) surrounding the hollow needle (17) is arranged between the thrust piece (16) and the end of the compressed-gas cartridge (13) to be opened.

7. An anti-skid device as claimed in one or more of claims 3 to 5, wherein the plunger (20) can be moved to and fro by means of a manually actuable lever (22) between two positions defined by a catch mechanism (23-25).

8. An anti-skid device as claimed in one or more of claims 2 to 7, wherein the device for opening the compressed-gas cartridge (13) is provided with a magazine (14, 28) for a plurality of compressed-gas cartridges (13).

9. An anti-skid device as claimed in claim 8, wherein the magazine (14) is pivotable and has receptacles (15) with at least two compressed-gas cartridges (13).

10. An anti-skid device as claimed in claim 9, wherein the receptacles (15) are pivotable out of a feed position into an opening position, in which the rear end of the respective compressed-gas cartridge (13) to be opened bears against a stop (26).

11. An anti-skid device as claimed in one or more of claims 5 to 10, wherein each receptacle (15) of the magazine (14) is preceded by a thrust piece (16) and an annular gasket (19).

12. An anti-skid device as claimed in claim 8, wherein the magazine (28) forms a drum rotatable about an axle (29) and having a multiplicity of receptacles (15) for compressed-gas cartridges (13).

13. An anti-skid device as claimed in claim 12, wherein a stop (26) for the ends of the compressed-gas cartridges (13) introduced into the receptacles (15) is arranged releasably on the side of the magazine (28) from which the compressed-gas cartridges (13) can be introduced into their receptacles (15).

14. An anti-skid device as claimed in claim 12 or 13, wherein the circumference of the magazine (28) is provided with a control cam (34) for introducing a rotational movement into the magazine (28).

15. An anti-skid device as claimed in claim 14, wherein a single lever (35) serves for introducing the rotational movement into the magazine (28) and for opening the compressed-gas cartridge (13).

16. An anti-skid device as claimed in one or more of claims 1 to 15, wherein the carrier (5) for the holder (3) can be moved out of the operating position back into the position of rest by means of a return spring (7).

17. An anti-skid device as claimed in one or more of claims 1 to 16, wherein the carrier (5) for the holder (3) is designed as a pivotable jib arm.

18. An anti-skid device as claimed in one or more of claims 1 to 17, wherein the drive unit (6) is connected to the carrier (5) via a Bowden pull (8).

## Revendications

1. Dispositif anti-dérapant pour véhicules avec plusieurs tronçons de chaînes (4) fixés à un support (3) susceptible d'être mis en rotation, et dont les extrémités opposées au support (3) sont projetées du support (3) lorsqu'il est en rotation, en position de marche, sous l'influence de la force centrifuge, dans la région de la zone de contact au sol d'un pneu (2) tournant de véhicule, avec un bras (5) pour le support, monté sur le véhicule et un dispositif d'entraînement susceptible d'être alimenté, à partir de la cabine du conducteur (1) et au moyen d'un conduit de gaz sous pression (11), par la pression d'un agent gazeux, et grâce auquel le bras (5) est susceptible d'être mû d'une position de repos à une position de marche, caractérisé en ce que le conduit de gaz sous pression (11) est susceptible d'être relié à un réservoir autonome à gaz comprimé formé par une cartouche à gaz comprimé (13) remplaçable du commerce.

2. Dispositif anti-dérapant selon la revendication 1, caractérisé en ce qu'un dispositif pour l'ouverture de chacune des cartouches de gaz sous pression (13) est disposé dans la cabine du conducteur (1) du véhicule.

3. Dispositif anti-dérapant selon la revendication 2, caractérisé en ce que le conduit de gaz sous pression (11) est relié à une extrémité d'un alésage (21) d'un piston (20, 31) susceptible d'être actionné par un mouvement de va-et-vient du dispositif pour l'ouverture de la cartouche de gaz sous pression (13).

4. Dispositif anti-dérapant selon la revendication 3, caractérisé en ce que l'extrémité du piston (20, 31) opposée au conduit de gaz sous pression (11) sert à l'actionnement d'une aiguille creuse (17) perforant l'obturateur de la cartouche de gaz comprimé (13).

5. Dispositif anti-dérapant selon la revendication 4, caractérisé en ce que l'aiguille creuse (17) est disposée au centre d'un élément de pression (16, 32) susceptible d'être mû par des mouvements de va-et-vient quantitativement limités, au moyen du piston (20, 31).

6. Dispositif anti-dérapant selon la revendication 5, caractérisé en ce qu'un joint annulaire (19) enfermant l'aiguille creuse, est disposé entre l'élément de pression (16) et l'extrémité à ouvrir de la cartouche de gaz sous pression (13).

7. Dispositif anti-dérapant selon une ou plusieurs des revendications 3 à 5, caractérisé en ce que le piston (20) est susceptible d'être actionné par un levier (22) actionné à la main, entre deux positions définies à l'aide d'un mécanisme à cran (23-25).

8. Dispositif anti-dérapant selon une ou plusieurs des revendications 2 à 7, caractérisé en ce que le dispositif pour l'ouverture de la cartouche de gaz comprimé (13) est pourvue d'un chargeur (14,28) pour plusieurs cartouches de gaz comprimé.

9. Dispositif anti-dérapant selon la revendication 8, caractérisé en ce que le chargeur est pivotant et présente des logements (15) pour au moins deux cartouches de gaz comprimé (13)

10. Dispositif anti-dérapant selon la revendication 9, caractérisé en ce que les logements (15) sont pivotants d'une position de chargement à une position d'ouverture dans laquelle l'extrémité postérieure de chacune des cartouches de gaz comprimé (13) est en appui sur un butoir (26).

11. Dispositif anti-dérapant selon une ou plusieurs des revendications 5 à 10, caractérisé en ce que, à chaque logement (15) de la cartouche (14), sont insérés un élément de pression (16) et un joint annulaire (19).

12. Dispositif anti-dérapant selon la revendication 8, caractérisé en ce que le chargeur (28) forme un tambour tournant autour d'un axe (29) et ayant une pluralité de logements de cartouches (15) de gaz comprimé (13).

13. Dispositif anti-dérapant selon la revendication 12, caractérisé en ce que, sur le côté du chargeur (28) sur lequel les cartouches de gaz comprimé (13) sont introduisibles dans leurs logements, un butoir (26) amovible est disposé pour les extrémités des cartouches de gaz comprimé (13) introduites dans les logements (15).

14. Dispositif anti-dérapant selon la revendication 12 ou 13, caractérisé en ce que le pourtour du chargeur (28) est pourvu d'une came de commande (34) pour communiquer un mouvement de rotation au chargeur (28).

15. Dispositif anti-dérapant selon la revendication 14, caractérisé en ce qu'un seul levier (35) sert à communiquer un mouvement de rotation au chargeur (28) et à ouvrir la cartouche de gaz comprimé (13).

16. Dispositif anti-dérapant selon une ou plusieurs des revendications 1 à 15, caractérisé en ce que le bras (5) pour le support (3) est Susceptible d'être ramené de la position de marche à la position de repos par un ressort de rappel (7).

17. Dispositf anti-dérapant selon une ou plusieurs des revendications 1 à 16, caractérisé en ce que le bras (5) pour le support (3) est formé par une potence pivotante.

18. Dispositif anti-dérapant selon une ou plusieurs des revendications 1 à 17, caractérisé en ce que le dispositif d'entraînement (6) est relié au bras (5) par l'intermédiaire d'un câble sous gaine (8).
